# EUROPÄISCHE PATENTANMELDUNG

(11) **EP 3 501 642 A1**
(43) Veröffentlichungstag der Anmeldung: **26.06.2019**
(21) Anmeldenummer: 17209988.9
(22) Anmeldetag: 22.12.2017
(51) Int. Cl.: B01J 31/22, C08G 18/48, C08G 18/71, C08G 18/75, C08G 18/10, C08G 18/22, C08G 18/24, C08G 18/28, C08L 75/08

(54) **VERFAHREN ZUR HERSTELLUNG GEMISCHTER SILANTERMINIERTER POLYMERE**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft ein Verfahren zur Herstellung eines silanterminierten Polymers durch Umsetzung eines Polyols A) mit einem Diisocyanat B), einem Isocyanatosilan C) und einem Aminosilan E), wobei die Polyolkomponente A) gleichzeitig mit einem Gemisch aus mindestens einem Diisocyanat B) und einem Isocyanatosilan C) umgesetzt und das dabei entstehende Produkt anschließend mit dem Aminosilan E) zu dem silanterminierten Polymer umgesetzt wird. Mit dem erfindungsgemäßen Verfahren können gemischte silanterminierte Polymere mit geringer Viskosität hergestellt werden.

## Beschreibung

Die vorliegende Erfindung betrifft die Herstellung gemischter silanterminierter Polymere mit niedriger Viskosität durch Umsetzung eines Polyols mit einem Diisocyanat, einem Isocyanatosilan und einem Aminosilan.

Als silanterminierte Polymere werden allgemein alkoxysilanfunktionelle Polymere, insbesondere alkoxysilanfunktionelle Polyurethane bezeichnet. Derartige Polymere werden beispielsweise als feuchtigkeitshärtende Einkomponenten-Polyurethane in Beschichtungs-, Dichtungs- und Klebemitteln, insbesondere im Bereich des Bauwesens und in der Automobilindustrie, angewendet.

Zur Herstellung silanterminierter Polymere sind unterschiedliche Synthesewege bekannt. Gemäß US 3 627 722 A oder US 3 632 557 A können beispielsweise aminofunktionelle Alkoxysilane mit NCO-haltigen Prepolymeren unter Bildung einer Harnstoffgruppe zu alkoxyfunktionellen Polyurethanen umgesetzt werden. Solche alkoxysilanfunktionellen Polyurethane vernetzen relativ rasch und härten zu nicht-klebrigen Materialen von guter Festigkeit und Dehnbarkeit aus. Allerdings weisen solche Polymere auf Grund der bei der Herstellung gebildeten Harnstoffgruppen eine hohe Viskosität auf, wodurch die Formulierung von Zusammensetzungen mit guter Verarbeitbarkeit deutlich erschwert wird.

Gemäß EP 0 070 475 A2 und US 5 990 257 A besteht ein alternativer Syntheseweg in der Umsetzung von NCO-haltigen Alkoxysilanen mit hydroxyfunktionellen Prepolymeren, wobei die Silangruppe unter Bildung einer Urethangruppe mit dem Polymer verknüpft wird. Als hydroxyfunktionelle Prepolymere können dabei beispielsweise hydroxyfunktionelle Polyurethane, die durch Umsetzung von Diisocyanaten mit Diolen erhalten werden können, oder langkettige Diole, die nicht über eine Reaktion mit Diisocyanaten vorverlängert wurden, verwendet werden (EP 0372561 A2). Ein Nachteil dieses Syntheseweges besteht darin, dass die benötigten NCO-haltigen Alkoxysilane nur beschränkt lagerfähig und oft teuer sind.

Die Nachteile dieser beiden Synthesewege können durch ein Hybridverfahren ausgeglichen werden, das beide Synthesewege kombiniert. Ein solches Verfahren ist beispielsweise in AU 2015100195 A4 und US 2015/0266995 A1 offenbart. Dabei wird in einem mehrstufigen Verfahren zunächst ein Teil der Hydroxylgruppen eines Polyetherpolyols mit einem Diisocyanat umgesetzt. In einem zweiten Schritt wird so lange ein Aminosilan zugegeben und mit den freien NCO-Gruppen des im ersten Schritt erhaltenen Polymers umgesetzt, bis keine freien NCO-Gruppen mehr in der Reaktionsmischung nachweisbar sind. Schließlich werden die noch freien Hydroxylgruppen des Polymers mit einem NCO-haltigen Alkoxysilan umgesetzt. Ein Nachteil dieses Verfahrens ist seine unzureichende Reproduzierbarkeit. So kann im ersten Reaktionsschritt die Reaktion der freien NCO-Gruppen des Diisocyanats mit den im Überschuss vorhandenen Hydroxylgruppen des Polyols nur schwer kontrolliert werden. Der unvollständige Umsatz wird deshalb oft nicht - wie an sich gewünscht - getroffen, und es kommt unter Umständen zu einer ungewollten Vorverlängerung, indem zwei Diole mit einem Diisocyanat-Molekül zu einem langkettigen Polymer reagieren. Dies führt zu einer Verbreiterung der Molekulargewichtsverteilung des silanterminierten Polymers hin zu einem höheren mittleren Molekulargewicht und damit zu einer unerwünschten Erhöhung der Viskosität. Darüber hinaus liegt bei dem beschriebenen Verfahren das Aminosilan in Gegenwart der freien Hydroxylgruppen des Polymers vor. Dadurch kann es ebenfalls zu einem ungewollten Molekulargewichtsaufbau durch Silankondensation kommen, was sich ebenfalls negativ auf die erhaltene Viskosität des Endprodukts auswirkt. Um die für die Anwendung als Beschichtungs-, Dichtungs- und Klebemitteln erforderliche geringe Viskosität zu erreichen, ist in diesem Fall deshalb die Zugabe von Weichmachern erforderlich.

Gemäß US 2015/0266995 A1 kann die Umsetzung eines Teil der Hydroxylgruppen eines Polyetherpolyols mit dem NCO-haltigen Alkoxysilan auch vor Zugabe des Diisocyanats erfolgen, Die in dieser Schrift beschriebenen Polymere werden zwar auch als gemischte silanterminierte Polymere bezeichnet, da sie sowohl Silangruppen enthalten, die über Harnstoffgruppen mit dem Polymerrückgrat verbunden sind, als auch solche Silangruppen, die über Urethangruppen mit dem Polymerrückgrat verbunden sind. Er fehlt in der Veröffentlichung jedoch die konkrete Lehre zum technischen Handeln, also eine klare Anweisung oder zumindest Hinweise zur genauen Ausgestaltung dieser Vorgehensweise.

Neben der unzureichenden Reproduzierbarkeit besteht ein weiterer Nachteil des Hybridverfahrens darin, dass es aus einer Vielzahl von Reaktionsschritten besteht, wodurch die Kosten des Verfahrens in die Höhe getrieben werden. Es ist vor diesem Hintergrund Aufgabe der vorliegenden Erfindung, ein vereinfachtes Verfahren zur Herstellung gemischt silanterminierter Polymere bereitzustellen, das sicher und reproduzierbar Polymere mit enger Molekulargewichtsverteilung und geringer Viskosität liefert.

Diese Aufgabe konnte mit der Bereitstellung des nachfolgend näher beschriebenen Verfahrens gelöst werden.

Die vorliegende Erfindung basiert auf der überraschenden Beobachtung, dass sich durch gleichzeitige Umsetzung von Polyolen mit einem Diisocyanat und einem Isocyanatosilan und anschließende Reaktion der dabei erhaltenen isocyanatfunktionellen Zwischenstufe mit einem Aminosilan auf sehr einfache Weise gemischte silanterminierte Polymere erhalten lassen, die sich durch niedrigere Viskositäten auszeichnen als solche, die nach den Verfahren des Standes der Technik erhalten werden. Diese silanterminierten Polymere werden als "gemischte" silanterminierte Polymere bezeichnet, da sie sowohl Silangruppen enthalten, die über Harnstoffgruppen mit dem Polymerrückgrat verbunden sind, als auch solche Silangruppen, die über Urethangruppen mit dem Polymerrückgrat verbunden sind.

Gegenstand der vorliegenden Erfindung ist daher ein Verfahren zur Herstellung eines gemischten silanterminierten Polymers durch
a) gleichzeitige Umsetzung der Hydroxylgruppen einer Polyolkomponente A) mit mindestens einem Diisocyanat B) und mindestens einem Isocyanatosilan C), in Gegenwart mindestens eines Katalysators D)
   und
b) anschließende Umsetzung der freien NCO-Gruppen des Reaktionsprodukts aus Schritt a) mit einem Aminosilan E).

Gegenstand der Erfindung sind auch die nach diesem Verfahren erhältlichen gemischten silanterminierten Polymere sowie deren Verwendung als Bindemittel in Beschichtungsmitteln, insbesondere in Lack-, Dichtstoff- oder Klebstoffrohstoffen.

Vorteilhafte Weiterbildungen sind in den Unteransprüchen angegeben. Sie können beliebig kombiniert werden, sofern sich aus dem Kontext nicht eindeutig das Gegenteil ergibt.

Bei den beim erfindungsgemäßen Verfahren eingesetzten Polyolkomponenten A) handelt es sich um beliebige Polyole, beispielsweise die aus der Polyurethanchemie bekannten polymeren Polyetherpolyole, Polyesterpolyole, Polycarbonatpolyole, Polyurethanpolyole und/oder Polyacrylatpolyole. Diese haben in der Regel eine mittlere Funktionalität von 1,8 bis 6, bevorzugt 1,8 bis 4, besonders bevorzugt von 1,9 bis 2,2. Das zahlenmittlere Molekulargewicht (nach DIN 55672-1:2016-03 bestimmt) dieser Polyole, vorzugsweise Polyetherpolyole, beträgt in der Regel von 3000 bis 24000 g/mol, vorzugsweise von 5000 bis 16000 g/mol, besonders bevorzugt von 7000 bis 12000 g/mol. Es können auch beliebige Gemische solcher Polyole eingesetzt werden.

Üblicherweise weisen die Polyolkomponenten A) OH-Zahlen, bestimmt nach DIN 53240, von mindestens 4,5 mg KOH/mg auf. Vorzugsweise liegt die OH-Zahl im Bereich von 8 bis 30 mg KOH/g, besonders bevorzugt von 8 bis 20 mg KOH/g, am meisten bevorzugt von 9 bis 18 mg KOH/g.

Bevorzugte Polyolkomponenten A) für das erfindungsgemäße Verfahren sind Polyetherpolyole, beispielsweise solche der in der DE 26 22 951 B, Spalte 6, Zeile 65 bis Spalte 7, Zeile 26, der EP-A 0 978 523 Seite 4, Zeile 45 bis Seite 5, Zeile 14 oder der WO 2011/069 966, Seite 4, Zeile 20 bis Seite 5, Zeile 23 genannten Art, sofern sie den oben gemachten Angaben hinsichtlich Funktionalität und Molekulargewicht entsprechen. Als Polyolkomponenten A) besonders bevorzugte Polyetherpolyole sind Anlagerungsprodukte von Ethylenoxid und/oder Propylenoxid an 1,2-Propandiol, 1,3-Propandiol, Glycerin, Trimethylolpropan, Ethylendiamin und/oder Pentaerythrit oder die beispielsweise gemäß Angew. Chem. 72, 927 (1960) durch Polymerisation von Tetrahydrofuran erhältlichen Polytetramethylenetherglykole des oben genannten Molekulargewichtsbereiches.

Ganz besonders bevorzugte Polyolkomponenten A) sind Polyetherpolyole auf Basis von Polypropylenoxid, wie sie beispielsweise bei der Fa. Covestro Deutschland AG unter dem Handelsnamen Acclaim®, z. B. als Acclaim® 8200 N, kommerziell erhältlich sind.

Bei den beim erfindungsgemäßen Verfahren eingesetzten Diisocyanaten B) handelt es sich um beliebige Diisocyanate mit aliphatisch, cycloaliphatisch, araliphatisch und/oder aromatisch gebundenen Isocyanatgruppen, die nach beliebigen Verfahren, z. B. durch Phosgenierung oder auf phosgenfreiem Weg, beispielsweise durch Urethanspaltung, hergestellt werden können.

Bevorzugte Diisocyanate B) sind solche der allgemeinen Formel (I)

**OCN-Y-NCO** **(I)**

in welcher Y für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen steht.

Geeignet sind beispielsweise z. B. 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI), 2,4- und/oder 2,6-hexahydrotolylendiisocyanat (H6-TDI), 1-Isocyanato-1-methyl-4(3)-isocyanatomethylcyclohexan, 2,4'- und 4,4'-Diisocyanatodicyclohexylmethan (H12-MDI), 1,3- und 1,4-Bis(isocyanatomethyl)cyclohexan, 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1,3- und 1,4-Bis-(isocyanatomethyl)benzol (XDI), 1,3- und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat (TDI) sowie beliebige Gemische dieser Isomeren, Diphenylmethan-2,4'- und/oder -4,4'-diisocyanat (MDI) und Naphthylen-1,5-diisocyanat (NDI) sowie beliebige Gemische solcher Diisocyanate.

Als Ausgangskomponente B) besonders bevorzugt sind Diisocyanate der allgemeinen Formel (I), in welcher Y für einen linearen oder verzweigten, aliphatischen oder cycloaliphatischen Rest mit 6 bis 13 Kohlenstoffatomen steht.

Besonders bevorzugte Diisocyanate B) für das erfindungsgemäße Verfahren sind 1,6-Diisocyanatohexan, 1-Isocyanato-3,3,5-trimethyl-5-isocyanatomethylcyclohexan, 2,4- und 2,6-hexahydrotolylene diisocyanate, 2,4- und 2,6-Toluylendiisocyanat oder deren Gemische.

In einer ganz besonders bevorzugten Ausführungsform wird als Diisocyanat B) das 1-Isocyanato-3,3,5-trimethyl-5-isocyanatomethylcyclohexan (Isophorondiisocyanat) eingesetzt.

Bei den beim erfindungsgemäßen Verfahren eingesetzten Isocyanatosilane C) handelt es sich um beliebige Verbindungen, in denen gleichzeitig nebeneinander mindestens eine, vorzugsweise genau eine, Isocyanatgruppe und mindestens eine, vorzugsweise genau eine, Silangruppe mit mindestens einem Alkoxysubstituenten vorliegen. Im Folgenden werden die Isocyanatosilane C) auch als Alkoxysilan-funktionelle Isocyanate C) oder als Isocyanatoalkoxysilane C) bezeichnet.

Geeignete Isocyanatoalkoxysilane C) sind beispielsweise Isocyanatoalkylalkoxysilane, wie sie z. B. nach den in US-B 3 494 951, EP-A 0 649 850, WO 2014/063 895 und WO 2016/010 900 beschriebenen Verfahren auf phosgenfreiem Weg durch thermische Spaltung der korrespondierenden Carbamate oder Harnstoffe zugänglich sind.

Gemäß einer weiteren bevorzugten Ausführungsform kommt als Alkoxysilan-funktionelles Isocyanat (Isocyanatosilan) C) mindestens eine Verbindung der allgemeinen Formel (II) 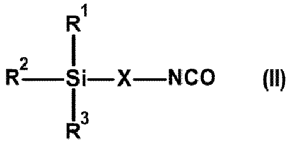 zum Einsatz,
in welcher
- R¹, R² und R³: unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy bedeuten, mit der Maßgabe, dass mindestens einer der Reste R¹, R² und R³ über ein Sauerstoffatom mit dem Siliziumatom verbunden ist, und
- X: für einen linearen oder verzweigten organischen Rest mit bis zu 6, vorzugsweise 1 bis 4 Kohlenstoffatomen, besonders bevorzugt für einen Propylenrest (-CH₂-CH₂-CH₂-) steht.

Beispiele für derartige Isocyanatoalkoxysilane sind Isocyanatomethyltrimethoxysilan, (Isocyanatomethyl)methyldimethoxysilan, Isocyanatomethyltriethoxysilan, (Isocyanatomethyl)-methyldiethoxysilan, Isocyanatomethyltriisopropoxysilan, 2-Isocyanatoethyl-trimethoxysilan, 2-Isocyanatoethyltriethoxysilan, 2-Isocyanatoethyltriisopropoxysilan, 3-Isocyanatopropyltrimethoxysilan, 3-Isocyanatopropyltriethoxysilan, 3-Isocyanatopropylmethyldimethoxysilan, 3-Isocyanatopropylmethyldiethoxysilan, 3-Isocyanatopropylethyldiethoxysilan, 3-Isocyanatopropyldimethylethoxysilan, 3-Isocyanatopropyldiisopropylethoxysilan, 3-Isocyanatopropyltripropoxysilan, 3-Isocyanatopropyltriisopropoxysilan, 3-Isocyanatopropyltributoxysilan, 3-Isocyanatopropylmethyldibutoxysilan, 3-Isocyanatopropylphenyldimethoxysilan, 3-Isocyanatopropylphenyldiethoxysilan, 3-Isocyanatopropyltris(methoxyethoxyethoxy)silan, 2-Isocyanatoisopropyltrimethoxysilan, 4-Isocyanatobutyltrimethoxysilan, 4-Isocyanatobutyltriethoxysilan, 4-Isocyanatobutyltriisopropoxysilane, 4-Isocyanatobutylmethyldimethoxysilan, 4-Isocyanatobutylmethyldiethoxysilan, 4-Isocyanatobutylethyldimethoxysilan, 4-Isocyanatobutylethyldiethoxysilan, 4-Isocyanatobutyldimethylmethoxysilan, 4-Isocyanatobutylphenyldimethoxysilan, 4-Isocyanatobutylphenyldiethoxysilan, 4-Isocyanato(3-methylbutyl)trimethoxysilan, 4-Isocyanato(3-methylbutyl)triethoxysilan, 4-Isocyanato(3-methylbutyl)methyldimethoxysilan, 4-Iso-cyanato(3-methylbutyl)methyldiethoxysilan und 11-Isocyanatoundecyltrimethoxysilan oder beliebige Gemische solcher Isocyanatoalkoxysilane.

Bevorzugte Isocyanatosilane C) sind insbesondere Isocyanatomethyltrimethoxysilan, Isocyanatomethyltriethoxysilan, (Isocyanatomethyl)methyldimethoxysilan, (Isocyanatomethyl)-methyldiethoxysilan, 3-Isocyanatopropyltrimethoxysilan, 3-Isocyanatopropylmethyldimethoxysilan, 3-Isocyanatopropyltriethoxysilan und 3-Isocyanatopropylmethyldiethoxysilan. Besonders bevorzugt ist die Verwendung von 3-Isocyanatopropyltrimethoxysilan.

Die beim erfindungsgemäßen Verfahren eingesetzten Stoffmengen an Diisocyanat B) und Isocyanatosilan C) richten sich nach der Stoffmenge an Hydroxylgruppen der Polyolkomponente A) und dem gewünschten Verhältnis von Isocyanatosilan C) zu Diisocyanat B). Die gesamte Stoffmenge von Isocyanatosilan C) und Diisocyanat B) wird vorzugsweise so gewählt, dass die Hydroxylgruppen des Polyols vollständig zu Urethangruppen umgesetzt werden und ein isocyanat- und silanfunktionelles Polymer entsteht.

Um das erfindungsgemäße Verfahren möglichst kostengünstig zu gestalten, ist es vorteilhaft, den Anteil von Isocyanatosilan C) möglichst gering zu halten. Vorzugsweise beträgt die Stoffmenge des eingesetzten Isocyanatosilans C) deshalb maximal 50 mol-% bezogen auf die Anzahl der Hydroxylgruppen der Polyolkomponente A). Im Allgemeinen liegt die Stoffmenge des eingesetzten Isocyanatosilans C) beim erfindungsgemäßen Verfahren im Bereich von 1 bis 50 mol-%, bevorzugt im Bereich von 5 bis 28 mol-%, besonders bevorzugt im Bereich von 10 bis 28 mol-%, ganz besonders bevorzugt im Bereich von 10 bis 25 mol-%, jeweils bezogen auf die Anzahl der Hydroxylgruppen des Polyols A).

Abhängig von der gewählten Stoffmenge an Isocyanatosilan C) kommt das Diisocyanat B) beim erfindungsgemäßen Verfahren im Allgemeinen in einer Stoffmenge von 50 bis 99 mol-%, bevorzugt von 72 bis 95 mol-%, besonders bevorzugt von 72 bis 90 mol-%, ganz besonders bevorzugt in einer Stoffmenge von 75 bis 90 mol-%, jeweils bezogen auf die Anzahl der Hydroxylgruppen des Polyols A), zum Einsatz.

Die Umsetzung der Polyolkomponente A) mit dem Diisocyanat B) und dem Isocyanatosilan C) erfolgt in Schritt a) des erfindungsgemäßen Verfahrens in Anwesenheit eines Katalysators D).

Geeignete Katalysatoren D) sind beliebige in der Isocyanatchemie übliche Urethanisierungskatalysatoren, sofern sie nicht auch die Silankondensation beschleuinigen. Beispielhaft seien hier genannt tertiäre Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Di-methylaminoethylpiperidin, N,N'-Dimethylpiperazin, N-Methyl-N'-dimethylaminopiperazin, 1,2-Dimethylimidazol, 2-Methylimidazol, N,N-Dimethylimidazol-β-phenylethylamin, 1,4-Diazabicyclo-(2,2,2)-octan (DA-BCO) und Bis-(N,N-dimethylaminoethyl)adipat, Amidine, wie z. B. 1,5-Diazabicyclo[4.3.0]nonen (DBN), 1,8-Diazabicyclo(5.4.0)undecen-7 (DBU) und 2,3-Dimethyl-3,4,5,6-tetrahydropyrimidin, Alkanolaminverbindungen, wie z. B. Triethanolamin, Triisopropanolamin, N-Methyldiethanolamin, N-Ethyldiethanolamin, Dimethylaminoethanol und 2-(N,N-Dimethyl-aminoethoxy)ethanol, N,N',N"-Tris-(dialkylaminoalkyl)hexahydrotriazine, wie z. B. N,N',N"-Tris-(dimethylaminopropyl)-s-hexahydrotriazin, Bis(dimethylaminoethyl)ether sowie Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)- Wismut(III)-2-ethylhexanoat, Wismut(III)-octoat, Wismut(III)-neodecanoat, Ytterbium(lll)-chlorid, Zinkchlorid, Zink-2-ethylcaproat, Zinn(II)-acetat, Zinn(II)-ethylcaproat, Zinn(II)-laurat, Zinn(II)-octoat, Zinn(II)-palmitat, Dibutylzinn(IV)-dilaurat (DBTL), Dibutylzinn(IV)-diacetat, Dibutylzinn(IV)-dichlorid oder Bleioctoat.

Weitere geeignete Katalysatoren sind beispielsweise auch Organotitanate, sowie β-Diketonat-Verbindungen der Nebengruppenmetalle Scandium, Lanthan, Cer, Praseodym, Neodym, Promethium, Samarium, Europium, Gadolinium, Terbium, Dysprosium Holmium, Erbium, Thulium, Ytterbium und Lutetium.

Bevorzugt kommen beim erfindungsgemäßen Verfahren als Katalysatoren D) Sn-, Ti- oder Ybhaltige Verbindungen zum Einsatz.

Besonders geeignete Zinn-haltige Katalysatoren D) sind beispielsweise Sn(II)-Salze organischer Carbonsäuren und Dialkyl-Sn(IV)-Salze organischer Carbonsäuren, wobei Dialkyl-Sn(IV)-Salze organischer Carbonsäuren ganz besonders bevorzugt sind. Geeignete organische Carbonsäuren sind insbesondere lineare oder verzweigte, aliphatische Mono- oder Dicarbonsäuren mit 2 bis 16 Kohlenstoffatomen, vorzugsweise 2 bis 12 Kohlenstoffatomen. Geeignete Dialkyl-Sn(IV)-Verbindungen umfassen vorzugsweise lineare oder verzweigte Alkylgruppen mit jeweils 1 bis 12 Kohlenstoffatomen, besonders bevorzugt 4 bis 8 Kohlenstoffatomen.

In einer ganz besonders bevorzugten Ausführungsform ist der Sn-haltige Katalysator ausgewählt aus Zinn(II)-acetat, Zinn(II)-ethylcaproat, Zinn(II)-laurat, Zinn(II)-octoat, Zinn(II)-palmitat, Di-butylzinn(IV)-dilaurat (DBTL), Dibutylzinn(IV)-diacetat, Dibutylzinn(IV)-dichlorid, oder Mischungen davon.

Besonders geeignete Titan-haltige Katalysatoren D) sind beispielsweise Organotitanate. Der Begriff Organotitanat bezeichnet im vorliegenden Dokument Verbindungen, welche zumindest ein über ein Sauerstoffatom an das Titan gebundenen Liganden aufweist. Geeignete Organotitanate weisen Liganden auf, welche ausgewählt sind aus der Gruppe bestehend aus Alkoxygruppe, Sulfonatgruppe, Carboxylatgruppe, Dialkylphosphatgruppe, Dialkylpyrophosphatgruppe und Acetylacetonatgruppe, wobei alle Liganden identisch oder verschieden voneinander sein können.

Als Alkoxygruppen haben sich insbesondere so genannte Neoalkoxy-Substituenten, insbesondere der Formel (III), als besonders geeignet erwiesen.

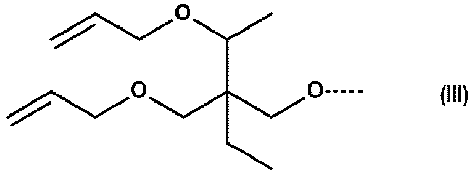

Als Sulfonsäuren haben sich insbesondere aromatische Sulfonsäuren, deren Aromaten mit einer Alkylgruppe substituiert sind, als besonders geeignet erwiesen. Als bevorzugte Sulfonsäuren gelten Reste der Formel (IV).

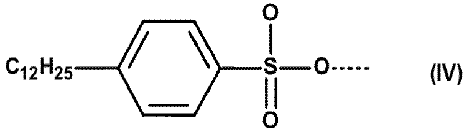

Besonders geeignet als Carboxylatgruppen haben sich insbesondere Carboxylate von Fettsäuren erwiesen. Als bevorzugtes Carboxylat gelten Decanoat, Stearat und Isostearat.

Insbesondere weist der Katalysator mindestens einen mehrzähnigen Liganden, auch Chelatligand genannt, auf. Insbesondere ist der mehrzähnige Ligand ein zweizähniger Ligand.

Vorzugsweise handelt es sich beim zweizähnigen Liganden um einen Liganden der Formel (V)

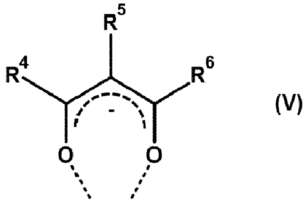

Dabei steht der Rest R⁴ für ein Wasserstoffatom oder für eine lineare oder verzweigte Alkylgruppe mit 1 bis 8 C-Atomen, insbesondere für eine Methylgruppe. Der Rest R⁵ steht für ein Wasserstoffatom oder für eine lineare oder verzweigte Alkylgruppe mit 1 bis 8 C-Atomen, welche gegebenenfalls Heteroatome aufweist, insbesondere für ein Wasserstoffatom.

Der Rest R⁶ steht für ein Wasserstoffatom oder für eine Alkylgruppe mit 1 bis 8, insbesondere mit 1 bis 3, C-Atomen oder für eine lineare oder verzweigte Alkoxygruppe mit 1 bis 8, insbesondere mit 1 bis 3, C-Atomen.

Bevorzugt handelt es sich bei dem Titan-haltige Katalysator D) um ein Organotitanat, insbesondere um ein Organotitanat der Formel (VI).

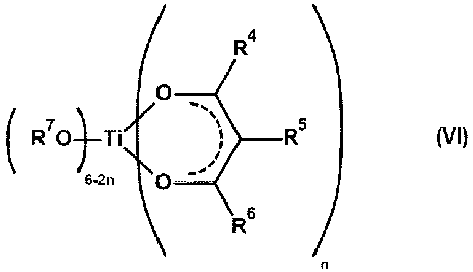

Die Reste R⁴, R⁵ und R⁶ wurden bereits vorhergehend beschrieben. Der Rest R⁷ steht für einen linearen oder verzweigten Alkylrest mit 2 bis 20 C-Atomen, insbesondere für einen Isobutyl- oder für einen Isopropylrest. n steht für einen Wert von 1 oder 2, insbesondere für 2.

Bevorzugt sind Organotitanate der Formel (VI), wobei der Rest R⁴ für eine Methylgruppe, der Rest R⁵ für ein Wasserstoffatom, der Rest R⁶ für eine Methylgruppe oder Methoxy- oder Ethoxygruppe und der Rest R⁷ für einen Isobutyl- oder für einen Isopropylrest steht.

Geeignete Organotitanate sind beispielsweise unter den Handelsnamen Tyzor® AA, GBA, GBO, AA-75, AA-65, AA-105, DC, BEAT, IBAY kommerziell von der Firma DuPont, USA, erhältlich oder unter den Handelsnamen Tytan™ PBT, TET, X85, TAA, ET, S2, S4 oder S6 kommerziell von TensoChema AG, Schweiz, erhältlich.

In einer alternativen Ausführungsform wird eine β-Diketonat-Verbindung der Nebengruppenmetalle Scandium, Lanthan, Cer, Praseodym, Neodym, Promethium, Samarium, Europium, Gadolinium, Terbium, Dysprosium Holmium, Erbium, Thulium, Ytterbium oder Lutetium als Katalysator D) eingesetzt. Diese β-Diketonat-Verbindung basieren auf den genannten Metallen bevorzugt in ihren Hauptoxidationsstufen +III bzw. +IV. Besonders bevorzugt sind β-Diketonat-Verbindungen basierend auf Yb(III).

Unter β-Diketonat-Verbindungen der vorstehend definierten Metalle werden alle Verbindungen dieser Metalle verstanden, die wenigstens einen Liganden oder Substituenten aufweisen, der durch Anionenbildung von einem β-Diketon, bevorzugt durch Deprotonierung, abgeleitet ist und folglich eine oder mehrere Struktureinheit der Formel (VII) aufweist.

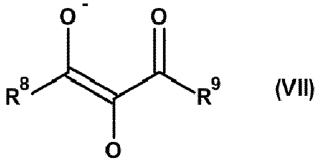

R⁸, R⁹ stehen dabei unabhängig voneinander für gleiche oder verschiedene gegebenenfalls heteroatomhaltige organische Reste mit bevorzugt jeweils 1-20, besonders bevorzugt 1-10 Kohlenstoffatomen.

Bevorzugt weisen die eingesetzten β-Diketonat-Verbindungen ausschließlich Liganden bzw. Substituenten des β-Diketonat-Typs auf.

Ein besonders bevorzugtes β-Diketonat ist Acetylaceton ('acac'). Ganz besonders bevorzugt ist dabei die Verwendung von Yb(acac)₃ als Katalysator.

Ferner ist es ebenso möglich, dass die erfindungsgemäßen Katalysatoren D) Kristallwasser enthalten.

Besonders bevorzugt sind Titan- oder Ytterbium-haltige Katalysatoren der genannten Art.

Die Katalysatoren D) können beim erfindungsgemäßen Verfahren einzeln oder in Form beliebiger Mischungen untereinander eingesetzt werden und kommen dabei in Mengen von 0,001 bis 1 Gew.-%, bevorzugt 0,01 bis 0,5 Gew.-%, berechnet als Gesamtgewicht an eingesetzten Katalysatoren bezogen auf das Gesamtgewicht der Reaktionspartner A), B) und C), zum Einsatz.

Beim erfindungsgemäßen Verfahren werden die Isocyanatgruppen des in Schritt a) erhaltenen isocyanat- und silanfunktionellen Polymers in einem zweiten Schritt b) mit einem Aminosilan E) umgesetzt.

Hierfür geeignete Aminosilane E) sind beispielsweise Aminosilane, der allgemeinen Formel (VIII) 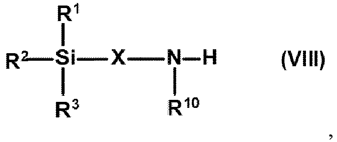 in welcher
- R¹, R², R³ und X: die für Formel (II) genannte Bedeutung haben
und
- R¹⁰: für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen oder einen Rest der Formel 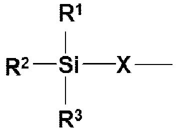 steht, in welchem R¹, R², R³ und X die vorstehend angegebene Bedeutung haben.

Geeignete Aminosilane der allgemeinen Formel (VIII) sind beispielsweise 3-Aminopropyltrimethoxysilan, 3-Amino-propyltriethoxysilan, 3-Aminopropylmethyldimethoxysilan, 3-Aminopropylmethyldiethoxysilan, 3-Aminopropylethyldiethoxysilan, 3-Aminopropyldimethylethoxysilan, 3-Aminopropyldiisopropylethoxysilan, 3-Aminopropyltripropoxysilan, 3-Aminopropyltributoxysilan, 3-Aminopropylphenyldiethoxysilan, 3-Aminopropylphenyldimethoxysilan, 3-Aminopropyltris-(methoxyethoxyethoxy)silan, 2-Aminoisopropyltrimethoxysilan, 4-Aminobutyltrimethoxysilan, 4-Aminobutyltriethoxysilan, 4-Aminobutylmethyldimethoxysilan, 4-Aminobutylmethyldiethoxysilan, 4-Aminobutylethyldimethoxysilan, 4-Aminobutylethyldiethoxysilan, 4-Aminobutyldimethylmethoxysilan, 4-Aminobutylphenyldimethoxysilan, 4-Aminobutylphenyldiethoxysilan, 4-Amino(3-methylbutyl)methyldimethoxysilan, 4-Amino(3-methylbutyl)methyldiethoxysilan, 4-Amino(3-methylbutyl)trimethoxysilan, 3-Aminopropylphenylmethyl-n-propoxysilan, 3-Aminopropylmethyldibutoxysilan, 3-Aminopropyldiethylmethylsilan, 3-Aminopropylmethyl-bis(trimethylsiloxy)silan, 11-Aminoundecyltrimethoxysilan, N-Methyl-3-aminopropyltrimethoxysilan, N-Methyl-3-aminopropyltriethoxysilan, N-(n-Butyl)-3-aminopropyltrimethoxysilan, N-(n-Butyl)-3-aminopropyltriethoxysilan, N-(2-Aminoethyl)-3-aminopropyltrimethoxysilan, N-(2-Aminoethyl)-3-aminoisobutylmethyldimethoxysilan, N-(2-Aminoethyl)-3-aminopropylmethyldimethoxysilan, N-(2-Aminoethyl)-3-aminopropyltris(2-ethylhexoxy)silan, N-(6-Amino-hexyl)-3-aminopropyltrimethoxysilan, N-Benzyl-N-(2-aminoethyl)-3-aminopropyltrimethoxysilan, Bis(3-trimethoxysilylpropyl)amin, Bis(3-triethoxysilylpropyl)amin, (Aminoethylaminomethyl)-phenethyltrimethoxysilan, N-Vinylbenzyl-N-(2-aminoethyl)-3-aminopropylpolysiloxan, N-Vinylbenzyl-N(2-aminoethyl)-3-aminopropylpolysiloxan, 3-Ureidopropyltriethoxysilan, 3-(m-Aminophenoxy)-propyltrimethoxysilan, m- und/oder p-Aminophenyltrimethoxysilan, 3-(3-Amino-propoxy)-3,3-dimethyl-1-propenyltrimethoxysilan, 3-Aminopropylmethylbis(trimethylsiloxy)-silan, 3-Aminopropyltris(trimethyl-siloxy)-silan, 3-Aminopropylpentamethyldisiloxan oder beliebige Gemische solcher Aminosilane.

Bevorzugte Aminosilane der allgemeinen Formel (VIII), sind solche, in welcher
- R¹, R² und R³: jeweils Alkylreste mit bis zu 6 Kohlenstoffatomen und/oder Alkoxyreste, die bis zu 3 Sauerstoffatome enthalten, bedeuten, mit der Maßgabe, dass mindestens einer der Reste R¹, R² und R³ für einen solchen Alkoxyrest steht,
- X: für einen linearen oder verzweigten Alkylenrest mit 3 oder 4 Kohlenstoffatomen steht, und
- R¹⁰: für einen gesättigten, linearen oder verzweigten, aliphatischen oder cycloaliphatischen Rest mit bis zu 6 Kohlenstoffatomen oder einen Rest der Formel 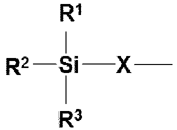 steht, in welchem R¹, R², R³ und X die vorstehend angegebene Bedeutung haben.

Besonders bevorzugte Aminosilane der allgemeinen Formel (VIII) sind solche, in welcher
- R¹, R² und R³: jeweils Methyl, Methoxy und/oder Ethoxy bedeuten, mit der Maßgabe, dass mindestens einer der Reste R¹, R² und R³ für einen Methoxy- oder Ethoxyrest steht,
- X: für einen Propylenrest (-CH₂-CH₂-CH₂-) steht, und
- R¹⁰: für einen linearen Alkylrest mit bis zu 4 Kohlenstoffatomen oder einen Rest der Formel 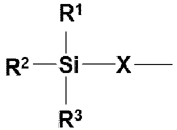 steht, in welchem R¹, R², R³ und X die vorstehend angegebene Bedeutung haben.

Ganz besonders bevorzugte Aminosilane der allgemeinen Formel (VIII) sind N-Methyl-3-aminopropyltrimethoxysilan, N-Methyl-3-aminopropyltriethoxysilan, N-(n-Butyl)-3-aminopropyltrimethoxysilan, N-(n-Butyl)-3-aminopropyltriethoxysilan, Bis(3-trimethoxysilylpropyl)-amin und/oder Bis(3-triethoxysilylpropyl)amin.

Geeignete Aminosilane E) sind beispielsweise auch solche der allgemeinen Formel (IX) 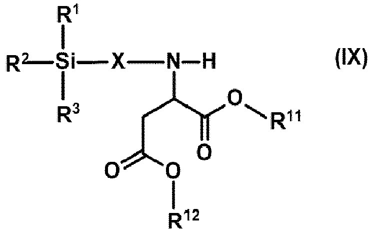 in welcher R¹, R² und R³ die für Formel (II) genannte Bedeutung haben,
- X: für einen linearen oder verzweigten organischen Rest mit mindestens 2 Kohlenstoffatomen steht und
- R¹¹ und R¹²: unabhängig voneinander gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen.

Bei diesen Aminosilanen der allgemeinen Formel (IX) handelt es sich um die silanfunktionellen Asparaginsäureester, die nach der Lehre der EP-A 0 596 360 durch Umsetzung von primäre Aminogruppen tragenden Aminosilanen mit Fumarsäureestern und/oder Maleinsäureestern erhältlich sind.

Geeignete Ausgangsverbindungen zu Herstellung von Aminosilanen der allgemeinen Formel (IX) sind daher grundsätzlich beliebige Aminosilane der allgemeinen Formel (X) 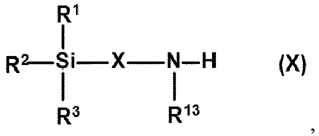 in welcher R¹, R², R³ und X die für Formel (II) genannte Bedeutung haben und R¹³ für Wasserstoff steht.

Diese werden mit Fumarsäurediestern und/oder Maleinsäurediestern der allgemeinen Formel (XI) 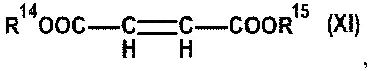 umgesetzt, in welcher die Reste R¹⁴ und R¹⁵ für gleiche oder verschiedene Reste stehen und organische Reste mit 1 bis 18, vorzugsweise 1 bis 9, besonders bevorzugt 1 bis 4, Kohlenstoffatomen bedeuten.

Bevorzugte Aminosilane der allgemeinen Formel (IX) sind Umsetzungsprodukte von Aminosilanen der allgemeinen Formel (VIII), in welcher
- R¹, R² und R³: jeweils Methyl, Methoxy und/oder Ethoxy bedeuten, mit der Maßgabe, dass mindestens einer der Reste R¹, R² und R³ für einen Methoxy- oder Ethoxyrest steht,
- X: für einen Propylenrest (-CH₂-CH₂-CH₂-) steht, und
- R¹⁰: für Wasserstoff steht,
mit
Fumarsäurediestern und/oder Maleinsäurediestern der allgemeinen Formel (XI), in welcher die Reste R¹⁴ und R¹⁵ für gleiche oder verschiedene Reste stehen und einen Methyl-, Ethyl-, n-Butyl- oder 2-Ethylhexylrest bedeuten.

Besonders bevorzugte Aminosilane der allgemeinen Formel (IX) sind Umsetzungsprodukte von 3-Aminopropyltrimethoxysilan und/oder 3-Aminopropyltriethoxysilan mit Maleinsäurediethylester.

Geeignete Aminosilane E) sind beispielsweise auch solche der allgemeinen Formel (XII) 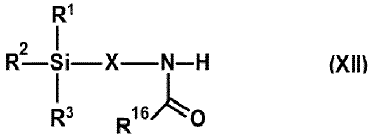 in welcher R¹, R² und R³ die für Formel (II) genannte Bedeutung haben,
- X: für einen linearen oder verzweigten organischen Rest mit mindestens 2 Kohlenstoffatomen und
- R¹⁶: für einen gesättigten linearen oder verzweigten, aliphatischen oder cycloaliphatischen organischen Rest mit 1 bis 8 Kohlenstoffatomen steht.

Bei diesen Aminosilanen der allgemeinen Formel (XII) handelt es sich um die bekannten silanfunktionellen Alkylamide, wie sie sich beispielsweise nach den in US 4 788 310 und US 4 826 915 offenbarten Verfahren durch Umsetzung von primäre Aminogruppen tragenden Aminosilanen mit Alkylcarbonsäurealkylestern unter Alkoholabspaltung erhalten lassen.

Geeignete Ausgangsverbindungen zu Herstellung von Aminosilanen der allgemeinen Formel (XII) sind daher grundsätzlich beliebige Aminosilane der allgemeinen Formel (XIII) 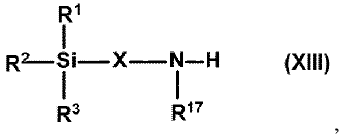 in welcher R¹, R², R³ und X die für Formel (II) genannte Bedeutung haben und R¹⁷ für Wasserstoff steht.

Diese werden mit Alkylcarbonsäurealkylestern der allgemeinen Formel (XIV)

**R**¹⁸-COOR¹⁹ **(XIV),**

umgesetzt, in welcher
- R¹⁸: für Wasserstoff oder einen gesättigten linearen oder verzweigten, aliphatischen oder cycloaliphatischen organischen Rest mit 1 bis 8 Kohlenstoffatomen und
- R¹⁹: für einen gesättigten aliphatischen organischen Rest mit 1 bis 4 Kohlenstoffatomen steht.

Bevorzugte Aminosilane der allgemeinen Formel (XII) sind Umsetzungsprodukte von Aminosilanen der allgemeinen Formel (VIII), in welcher
- R¹, R² und R³: jeweils Methyl, Methoxy und/oder Ethoxy bedeuten, mit der Maßgabe, dass mindestens einer der Reste R¹, R² und R³ für einen Methoxy- oder Ethoxyrest steht,
- X: für einen Propylenrest (-CH₂-CH₂-CH₂-) steht, und
- R⁴: für Wasserstoff steht,
mit
Ameisensäurealkylestern der allgemeinen Formel (XIV), in welcher
- R¹⁸: für Wasserstoff und
- R¹⁹: für einen gesättigten aliphatischen organischen Rest mit 1 bis 4 Kohlenstoffatomen steht.

Besonders bevorzugte Aminosilane E) der allgemeinen Formel (IV) sind Umsetzungsprodukte von 3-Aminopropyltrimethoxysilan und/oder 3-Aminopropyltriethoxysilan mit Methylformiat und/oder Ethylformiat.

Ganz besonders bevorzugt wird die Menge an Aminosilan E) so gewählt, dass in Verfahrensschritt b) ein isocyanatgruppenfreies Produkt entsteht. Dazu wird die Menge an Aminosilan E) bei der praktischen Durchführung des erfindungsgemäßen Verfahren im Allgemeinen so gewählt, dass auf jede Isocyanatgruppe des in Verfahrensschritt a) entstandenen isocyanat- und silanfunktionellen Polymers von 0,8 bis 1,2, vorzugsweise von 0,9 bis 1,1, besonders bevorzugt von 0,95 bis 1,05 Aminogruppen entfallen.

Zur Durchführung des erfindungsgemäßen Verfahrens wird in einem ersten Schritt a) die Polyolkomponente A) gleichzeitig mit dem Diisocyanat B) und dem Isocyanatosilan C) umgesetzt.

In einer möglichen Ausführungsform wird beim erfindungsgemäßen Verfahren die Polyolkomponente A), gegebenenfalls unter einem Inertgas wie beispielsweise Stickstoff, bei einer Temperatur zwischen 20 und 100°C vorgelegt. Anschließend werden das Diisocyanat B) und das Isocyanatosilan C) gleichzeitig parallel in der oben angegebenen Menge zugegeben und die Temperatur der Reaktionsmischung gegebenenfalls durch eine geeignete Maßnahme (Heizen oder Kühlen) auf 30°C bis 120°C, vorzugsweise von 50°C bis 100°C eingestellt. In einer anderen Ausführungsform des erfindungsgemäßen Verfahrens werden das Diisocyanat B) und das Isocyanatosilan C) in einem vorgelagerten Schritt zu einer einheitlichen Isocyanatkomponente abgemischt und als Gemisch unter den vorstehend genannten Bedingungen zur Polyolkomponente A) zudosiert.

Unabhängig davon kann der mitzuverwendende Katalysator D) in der oben angegebenen Menge einem oder mehreren der Reaktionspartner, der Polyolkomponente A), dem Diisocyanat B) und/oder dem Isocyanatosilan C) bzw. einem Gemisch der Komponenten B) und C) bereits vor Beginn der eigentlichen Umsetzung zugemischt werden. Der Katalysator D) kann aber auch zu jedem beliebigen Zeitpunkt während des Zudosierens oder auch im Anschluss daran dem Reaktionsgemisch zugegeben werden.

Der Verlauf der Umsetzung kann durch z. B. titrimetrische Bestimmung des NCO-Gehaltes verfolgt werden.

Nach vollständiger Umsetzung der Hydroxylgruppen der Polyolkomponente A) wird in einem zweiten Reaktionsschritt b) das Aminosilan E) zudosiert. Die Umsetzung mit den freien Isocyanatgruppen erfolgt bei einer Temperatur der Reaktionsmischung von 30°C bis 120°C, vorzugsweise von 50°C bis 100°C, die gegebenenfalls durch eine geeignete Maßnahme (Heizen oder Kühlen) eingestellt wird.

Unabhängig von der Art und Menge der eingesetzten Ausgangsverbindungen A) bis E) erhält man als Produkte des erfindungsgemäßen Verfahrens klare, praktisch farblose gemischte silanterminierte Polymere, die in der Regel Farbzahlen von unter 120 APHA, vorzugsweise von unter 80 APHA, besonders bevorzugt von unter 60 APHA aufweisen und sich hervorragend als Bindemittel für Lack-, Dichtstoff- oder Klebstoffrohstoffe eignen.

Die mit dem erfindungsgemäßen Verfahren hergestellten gemischten silanterminierten Polymere eignen sich in besonderer Weise als feuchtigkeitshärtende Klebstoffe mit ausgezeichneter Langzeitstabilität und guter Verarbeitbarkeit. Aufgrund ihrer geringen Viskosität machen sie den Zusatz von Weichmachern überflüssig. Die silanterminierten Polymere können insbesondere als Klebstoffe auf porösen Substraten eingesetzt werden.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909.

OH-Zahlen wurden titrimetrisch nach DIN 53240 T.2 bestimmt.

Sämtliche Viskositätsmessungen erfolgten mit einem Physica MCR 51 Rheometer der Fa. Anton Paar Germany GmbH (D) nach DIN EN ISO 3219.

Die Messung der Hazen-Farbzahl erfolgte spektrofotometrisch nach DIN EN ISO 6271-2:2004 mit einem LICO 400-Spektrofotometer der Fa. Lange, DE.

Bei den angegebenen Molekulargewichten handelt sich jeweils um zahlenmittlere Molekulargewichte (Mn), die sich durch Gelpermeationschromatographie bestimmen lassen.

Für die praktische Durchführung der nachfolgenden Beispiele ist zu beachten, dass die Gehalte der eingesetzten Substanzen an den für die jeweilige Reaktion maßgeblichen Gruppen (z.B. Amingehalt des Aminosilans) durch spezifische Bestimmungsmethoden (z.B. Titration) bestimmt wurden und die tatsächlich eingesetzten Mengen auf Gehalte von jeweils 100 % kalkuliert wurden.

### Beispiel 1 (Vergleichsbeispiel)

In einem 2 L-Sulfierbecher mit Deckel, Rührer, Thermometer und Stickstoffdurchfluss wurden 1367,7 g (0,16 mol) eines Propylenglykols der OH-Zahl 13,4 (Acclaim® Polyol 8200 N der Covestro Deutschland AG; Leverkusen DE) mit 35,3 g (0,16 mol) 3-Isocyanatopropyltrimethoxysilan (Geniosil® GF 40 der Wacker Chemie AG; München DE) bei 60 °C unter Zugabe von 160 ppm Valikat® Bi 2810 (Bismut(III)neodecanoat) (Umicore Specialty Materials, Brügge BEL) gerührt, bis im IR Spektrum keine Isocyanatbande mehr zu sehen war. Anschließend wurde zügig 36,3 g (0,16 mol) Isophorondiisocyanat zugetropft und bis zum Erreichen des theoretischen NCO-Gehalts von 0,47 % prepolymerisiert. Nach Zugabe von 56,2 g (0,16 mol) *N*-(3-Trimethoxysilylpropyl)-asparaginsäure-diethylester (hergestellt gemäß EP-A 596 360, Bsp. 5) wurde die Mischung gerührt, bis im IR Spektrum keine Isocyanatbande mehr zu sehen war. Das so erhaltene Alkoxysilyl-Endgruppen aufweisende Polyurethanprepolymer hatte eine Viskosität von 18.600 mPas und eine Farbzahl von 28 APHA.

### Beispiel 2 (erfindungsgemäß)

In einem 2 L-Sulfierbecher mit Deckel, Rührer, Thermometer und Stickstoffdurchfluss wurden 1367,7 g (0,16 mol) eines Propylenglykols der OH-Zahl 13,4 (Acclaim® Polyol 8200 N der Covestro Deutschland AG; Leverkusen DE) mit 36,3 g (0,16 mol) Isophorondiisocyanat und 35,3 g (0,16 mol) 3-Isocyanatopropyltrimethoxysilan (Geniosil® GF 40 der Wacker Chemie AG; München DE) bei 60 °C unter Zugabe von 160 ppm Valikat® Bi 2810 (Bismut(III)neodecanoat) (Umicore Specialty Materials, Brügge BEL) bis zum Erreichen des theoretischen NCO-Gehalts von 0,47 % prepolymerisiert. Anschließend wurden 56.2 g (0,16 mol) *N*-(3-Trimethoxysilylpropyl)asparaginsäurediethylester (hergestellt gemäß EP-A 596 360, Bsp. 5) zügig zugetropft und gerührt, bis im IR Spektrum keine Isocyanatbande mehr zu sehen war. Das erhaltene Alkoxysilyl-Endgruppen aufweisende Polyurethanprepolymer hatte eine Viskosität von 30.900 mPas und eine Farbzahl von 26 APHA.

### Beispiel 3 (Vergleichsbeispiel)

In einem 2 L-Sulfierbecher mit Deckel, Rührer, Thermometer und Stickstoffdurchfluss wurden 1369,3 g (0,16 mol) eines Propylenglykols der OH-Zahl 13,2 (Acclaim® Polyol 8200 N der Covestro Deutschland AG; Leverkusen DE) mit 34,2 g (0,16 mol) 3-Isocyanatopropyltrimethoxysilan (Geniosil® GF 40 der Wacker Chemie AG; München DE) bei 60 °C unter Zugabe von 40 ppm Dibutylzinndilaurat gerührt, bis im IR Spektrum keine Isocyanatbande mehr zu sehen war. Anschließend wurden zügig 35,8 g (0,16 mol) Isophorondiisocyanat zugetropft und bis zum Erreichen des theoretischen NCO-Gehalts von 0,47 % prepolymerisiert. Nach Zugabe von 56,2 g (0,16 mol) *N*-(3-Trimethoxysilylpropyl)asparaginsäure-diethylester (hergestellt gemäß EP-A 596 360, Bsp. 5) wurde die Mischung gerührt, bis im IR Spektrum keine Isocyanatbande mehr zu sehen war. Das erhaltene Alkoxysilyl-Endgruppen aufweisende Polyurethanprepolymer hatte eine Viskosität von 13.600 mPas und eine Farbzahl von 18 APHA.

### Beispiel 4 (Vergleichsbeispiel)

In einem 2 L-Sulfierbecher mit Deckel, Rührer, Thermometer und Stickstoffdurchfluss wurden 1369,3 g (0,16 mol) eines Propylenglykols der OH-Zahl 13,2 (Acclaim® Polyol 8200 N der Covestro Deutschland AG; Leverkusen DE) mit 35,8 g (0,16 mol) Isophorondiisocyanat bei 60 °C unter Zugabe von 40 ppm Dibutylzinndilaurat bis zum Erreichen des theoretischen NCO-Gehalts von 0,47 % prepolymerisiert. Nach Zugabe von 56,2 g (0,16 mol) *N*-(3-Trimethoxysilylpropyl)-asparaginsäure-diethylester (hergestellt gemäß EP-A 596 360, Bsp. 5) wurde die Mischung gerührt, bis im IR Spektrum keine Isocyanatbande mehr zu sehen war. Danach wurden zügig 34,2 g (0,16 mol) 3-Isocyanatopropyltrimethoxysilan (Geniosil® GF 40 der Wacker Chemie AG; München DE) zugetropft und erneut gerührt, bis im IR Spektrum keine Isocyanatbande mehr zu sehen war. Das erhaltene Alkoxysilyl-Endgruppen aufweisende Polyurethanprepolymer hatte eine Viskosität von 13.000 mPas und eine Farbzahl von 20 APHA.

### Beispiel 5 (erfindungsgemäß)

In einem 2 L-Sulfierbecher mit Deckel, Rührer, Thermometer und Stickstoffdurchfluss wurden 1369,3 g (0,16 mol) eines Propylenglykols der OH-Zahl 13,2 (Acclaim® Polyol 8200 N der Covestro Deutschland AG; Leverkusen DE) mit 35,8 g (0,16 mol) Isophorondiisocyanat und 34,2 g (0,16 mol) 3-Isocyanatopropyltrimethoxysilan (Geniosil® GF 40 der Wacker Chemie AG; München DE) bei 60 °C unter Zugabe von 40 ppm Dibutylzinndilaurat bis zum Erreichen des theoretischen NCO-Gehalts von 0,47 % prepolymerisiert. Anschließend wurden 56.2 g (0,16 mol) *N-(3-*Trimethoxysilylpropyl)asparaginsäure-diethylester (hergestellt gemäß EP-A 596 360, Bsp. 5) zügig zugetropft und gerührt, bis im IR Spektrum keine Isocyanatbande mehr zu sehen war. Das erhaltene Alkoxysilyl-Endgruppen aufweisende Polyurethanprepolymer hatte eine Viskosität von 12.900 mPas und eine Farbzahl von 16 APHA.

Diese Beispiele zeigen, dass durch das vereinfachte erfindungsgemäße Verfahren nach Beispiel 5 silanterminierte Polymere mit geringer Viskosität erhalten werden können. Überraschenderweise unterscheiden sich die erfindungsgemäß hergestellten Polymere in ihrer Viskosität nicht wesentlich von denjenigen, die durch die aus dem Stand der Technik bekannten Verfahren hergestellt wurden (Beispiele 3 und 4). Somit konnte gezeigt werden, dass es durch das erfindungsgemäße Verfahren möglich ist, silanterminierte Polymere in nur zwei Reaktionsschritten herzustellen, ohne dass die Viskosität der Polymere beeinträchtigt wird, also ansteigt.

### Beispiel 6 (Vergleichsbeispiel)

In einem 2 L-Sulfierbecher mit Deckel, Rührer, Thermometer und Stickstoffdurchfluss wurden 1349,7 g (0,16 mol) eines Propylenglykols der OH-Zahl 13,3 (Acclaim® Polyol 8200 N der Covestro Deutschland AG; Leverkusen DE) mit 18,9 g (0,089 mol) 3-Isocyanatopropyltrimethoxysilan (Geniosil® GF 40 der Wacker Chemie AG; München DE) bei 60 °C unter Zugabe von 40 ppm Dibutylzinndilaurat gerührt, bis im IR Spektrum keine Isocyanatbande mehr zu sehen war. Anschließend wurden zügig 51,3 g (0,231 mol) Isophorondiisocyanat zugetropft und bis zum Erreichen des theoretischen NCO-Gehalts von 0,68 % prepolymerisiert. Nach Zugabe von 81,2 g (0,231 mol) *N*-(3-Trimethoxysilylpropyl)asparaginsäure-diethylester (hergestellt gemäß EP-A 596 360, Bsp. 5) wurde die Mischung gerührt, bis im IR Spektrum keine Isocyanatbande mehr zu sehen war. Das erhaltene Alkoxysilyl-Endgruppen aufweisende Polyurethanprepolymer hatte eine Viskosität von 21.200 mPas und eine Farbzahl von 22 APHA.

### Beispiel 7 (erfindungsgemäß)

In einem 2 L-Sulfierbecher mit Deckel, Rührer, Thermometer und Stickstoffdurchfluss wurden 1349,7 g (0,16 mol) eines Propylenglykols der OH-Zahl 13,3 (Acclaim® Polyol 8200 N der Covestro Deutschland AG; Leverkusen DE) mit 51,3 g (0,231 mol) Isophorondiisocyanat und 18,9 g (0,089 mol) 3-Isocyanatopropyltrimethoxysilan (Geniosil® GF 40 der Wacker Chemie AG; München DE) bei 60 °C unter Zugabe von 40 ppm Dibutylzinndilaurat bis zum Erreichen des theoretischen NCO-Gehalts von 0,68 % prepolymerisiert. Anschließend wurden 81,2 g (0,231 mol) *N-(3-*Trimethoxysilylpropyl)asparaginsäure-diethylester (hergestellt gemäß EP-A 596 360, Bsp. 5) zügig zugetropft und gerührt, bis im IR Spektrum keine Isocyanatbande mehr zu sehen war. Das erhaltene Alkoxysilyl-Endgruppen aufweisende Polyurethanprepolymer hatte eine Viskosität von 20.200 mPas und eine Farbzahl von 18 APHA.

### Beispiel 8 (Vergleichsbeispiel)

In einem 2 L-Sulfierbecher mit Deckel, Rührer, Thermometer und Stickstoffdurchfluss wurden 1349,7 g (0,16 mol) eines Propylenglykols der OH-Zahl 13,3 (Acclaim® Polyol 8200 N, Covestro Deutschland AG; Leverkusen DE) mit 18,0 g (0,08 mol) 3-Isocyanatopropyltrimethoxysilan (Geniosil® GF 40, Wacker Chemie AG; München DE) bei 60 °C unter Zugabe von 40 ppm Dibutylzinndilaurat gerührt, bis im IR Spektrum keine Isocyanatbande mehr zu sehen war. Anschließend wurden zügig 53,3 g (0,24 mol) Isophorondiisocyanat zugetropft und bis zum Erreichen des theoretischen NCO-Gehalts von 0,68 % prepolymerisiert. Nach Zugabe von 84,3 g (0,24 mol) *N-(3-*Trimethoxysilylpropyl)asparaginsäure-diethylester (hergestellt gemäß EP-A 596 360, Bsp. 5) wurde die Mischung gerührt, bis im IR Spektrum keine Isocyanatbande mehr zu sehen war. Das erhaltene Alkoxysilyl-Endgruppen aufweisende Polyurethanprepolymer hatte eine Viskosität von 23.500 mPas und eine Farbzahl von 28 APHA.

### Beispiel 9 (erfindungsgemäß)

In einem 2 L-Sulfierbecher mit Deckel, Rührer, Thermometer und Stickstoffdurchfluss wurden 1349,7 g (0,16 mol) eines Propylenglykols der OH-Zahl 13,3 (Acclaim® Polyol 8200 N, Covestro Deutschland AG; Leverkusen DE) mit 53,3 g (0,24 mol) Isophorondiisocyanat und 18,0 g (0,08 mol) 3-Isocyanatopropyltrimethoxysilan (Geniosil® GF 40, Wacker Chemie AG; München DE) bei 60 °C unter Zugabe von 40 ppm Dibutylzinndilaurat bis zum Erreichen des theoretischen NCO-Gehalts von 0,68 % prepolymerisiert. Anschließend wurden 84,3 g (0,24 mol) *N-(3-*Trimethoxysilylpropyl)asparaginsäure-diethylester (hergestellt gemäß EP-A 596 360, Bsp. 5) zügig zugetropft und gerührt, bis im IR Spektrum keine Isocyanatbande mehr zu sehen war. Das erhaltene Alkoxysilyl-Endgruppen aufweisende Polyurethanprepolymer hat eine Viskosität von 20.900 mPas und eine Farbzahl von 24 APHA.

### Beispiel 10 (Vergleichsbeispiel)

In einem 2 L-Sulfierbecher mit Deckel, Rührer, Thermometer und Stickstoffdurchfluss wurden 1349,7 g (0,16 mol) eines Propylenglykols der OH-Zahl 13,3 (Acclaim® Polyol 8200 N der Covestro Deutschland AG; Leverkusen DE) mit 6,7 g (0,03 mol) 3-Isocyanatopropyltrimethoxysilan (Geniosil® GF 40 der Wacker Chemie AG; München DE) bei 60 °C unter Zugabe von 40 ppm Dibutylzinndilaurat gerührt, bis im IR Spektrum keine Isocyanatbande mehr zu sehen war. Anschließend wurden zügig 63,0 g (0,28 mol) Isophorondiisocyanat zugetropft und bis zum Erreichen des theoretischen NCO-Gehalts von 0,85 % prepolymerisiert. Nach Zugabe von 98,4 g (0,28 mol) *N-*(3-Trimethoxysilylpropyl)asparaginsäure-diethylester (hergestellt gemäß EP-A 596 360, Bsp. 5) wurde die Mischung gerührt, bis im IR Spektrum keine Isocyanatbande mehr zu sehen war. Das erhaltene Alkoxysilyl-Endgruppen aufweisende Polyurethanprepolymer hatte eine Viskosität von 34.900 mPas und eine Farbzahl von 18 APHA.

### Beispiel 11 (erfindungsgemäß)

In einem 2 L-Sulfierbecher mit Deckel, Rührer, Thermometer und Stickstoffdurchfluss wurden 1349,7 g (0,16 mol) eines Propylenglykols der OH-Zahl 13,3 (Acclaim® Polyol 8200 N, Covestro Deutschland AG; Leverkusen DE) mit 63,0 g (0,28 mol) Isophorondiisocyanat und 6,7 g (0,03 mol) 3-Isocyanatopropyltrimethoxysilan (Geniosil® GF 40, Wacker Chemie AG; München DE) bei 60 °C unter Zugabe von 40 ppm Dibutylzinndilaurat bis zum Erreichen des theoretischen NCO-Gehalts von 0,85 % prepolymerisiert. Anschließend wurden 98,4 g (0,28 mol) *N-(3-*Trimethoxysilylpropyl)asparaginsäure-diethylester (hergestellt gemäß EP-A 596 360, Bsp. 5) zügig zugetropft und gerührt, bis im IR-Spektrum keine Isocyanatbande mehr zu sehen war. Das erhaltene Alkoxysilyl-Endgruppen aufweisende Polyurethanprepolymer hatte eine Viskosität von 29.200 mPas und eine Farbzahl von 14 APHA.

### Beispiel 12 (Vergleichsbeispiel)

In einem 2 L-Sulfierbecher mit Deckel, Rührer, Thermometer und Stickstoffdurchfluss wurden 1369,6 g (0,16 mol) eines Propylenglykols der OH-Zahl 13,2 (Acclaim® Polyol 8200 N, Covestro Deutschland AG; Leverkusen DE) mit 34,2 g (0,16 mol) 3-Isocyanatopropyltrimethoxysilan (Geniosil® GF 40, Wacker Chemie AG; München DE) bei 60 °C unter Zugabe von 120 ppm des Titankatalysators Tyzor® IBAY (abcr GmbH, Karlsruhe DE) gerührt, bis im IR Spektrum keine Isocyanatbande mehr zu sehen war. Anschließend wurden zügig 35,9 g (0,16 mol) Isophorondiisocyanat zugetropft und bis zum Erreichen des theoretischen NCO-Gehalts von 0,47 % prepolymerisiert. Nach Zugabe von 56,2 g (0,16 mol) *N*-(3-Trimethoxysilylpropyl)asparaginsäure-diethylester (hergestellt gemäß EP-A 596 360, Bsp. 5) wurde die Mischung gerührt, bis im IR Spektrum keine Isocyanatbande mehr zu sehen war. Das erhaltene Alkoxysilyl-Endgruppen aufweisende Polyurethanprepolymer hat eine Viskosität von 15.050 mPas und eine Farbzahl von 36 APHA.

### Beispiel 13 (erfindungsgemäß)

In einem 2 L-Sulfierbecher mit Deckel, Rührer, Thermometer und Stickstoffdurchfluss wurden 1369,6 g (0,16 mol) eines Propylenglykols der OH-Zahl 13,2 (Acclaim® Polyol 8200 N, Covestro Deutschland AG; Leverkusen DE) mit 35,9 g (0,16 mol) Isophorondiisocyanat und 34,2 g (0,16 mol) 3-Isocyanatopropyltrimethoxysilan (Geniosil® GF 40, Wacker Chemie AG; München DE) bei 60 °C unter Zugabe von 120 ppm des Titankatalysators Tyzor® IBAY (abcr GmbH, Karlsruhe DE) bis zum Erreichen des theoretischen NCO-Gehalts von 0,47 % prepolymerisiert. Anschließend wurden 56.2 g (0,16 mol) *N*-(3-Trimethoxysilylpropyl)asparaginsäure-diethylester (hergestellt gemäß EP-A 596 360, Bsp. 5) zügig zugetropft und gerührt, bis im IR Spektrum keine Isocyanatbande mehr zu sehen war. Das erhaltene Alkoxysilyl-Endgruppen aufweisende Polyurethanprepolymer hatte eine Viskosität von 13.700 mPas und eine Farbzahl von 30 APHA.

### Beispiel 14 (Vergleichsbeispiel)

In einem 2 L-Sulfierbecher mit Deckel, Rührer, Thermometer und Stickstoffdurchfluss wurden 1369,6 g (0,16 mol) eines Propylenglykols der OH-Zahl 13,2 (Acclaim® Polyol 8200 N, Covestro Deutschland AG; Leverkusen, DE) mit 34,2 g (0,16 mol) 3-Isocyanatopropyltrimethoxysilan (Geniosil® GF 40, Wacker Chemie AG; München DE) bei 60 °C unter Zugabe von 120 ppm Yb(acac)₃ (abcr GmbH, Karlsruhe DE) gerührt, bis im IR Spektrum keine Isocyanatbande mehr zu sehen war. Anschließend wurde zügig 35,9 g (0,16 mol) Isophorondiisocyanat zugetropft und bis zum Erreichen des theoretischen NCO-Gehalts von 0,47 % prepolymerisiert. Nach Zugabe von 56,2 g (0,16 mol) *N*-(3-Trimethoxysilylpropyl)asparaginsäure-diethylester (hergestellt gemäß EP-A 596 360, Bsp. 5) wurde die Mischung gerührt, bis im IR Spektrum keine Isocyanatbande mehr zu sehen war. Das erhaltene Alkoxysilyl-Endgruppen aufweisende Polyurethanprepolymer hatte eine Viskosität von 16.500 mPas und eine Farbzahl von 16 APHA.

### Beispiel 15 (erfindungsgemäß)

In einem 2 L-Sulfierbecher mit Deckel, Rührer, Thermometer und Stickstoffdurchfluss wurden 1369,6 g (0,16 mol) eines Propylenglykols der OH-Zahl 13,2 (Acclaim® Polyol 8200 N, Covestro Deutschland AG; Leverkusen DE) mit 35,9 g (0,16 mol) Isophorondiisocyanat und 34,2 g (0,16 mol) 3-Isocyanatopropyltrimethoxysilan (Geniosil® GF 40, Wacker Chemie AG; München DE) bei 60 °C unter Zugabe von 120 ppm Yb(acac)₃ (abcr GmbH, Karlsruhe DE) bis zum Erreichen des theoretischen NCO-Gehalts von 0,47 % prepolymerisiert. Anschließend wurden 56.2 g (0,16 mol) *N*-(3-Trimethoxysilylpropyl)asparaginsäure-diethylester (hergestellt gemäß EP-A 596 360, Bsp. 5) zügig zugetropft und gerührt, bis im IR Spektrum keine Isocyanatbande mehr zu sehen war. Das erhaltene Alkoxysilyl-Endgruppen aufweisende Polyurethanprepolymer hatte eine Viskosität von 16.000 mPas und eine Farbzahl von 14 APHA.

## Patentansprüche

1. Verfahren zur Herstellung eines gemischten silanterminierten Polymers durch
a) gleichzeitige Umsetzung der Hydroxylgruppen einer Polyolkomponente A) mit mindestens einem Diisocyanat B) und mindestens einem Isocyanatosilan C), in Gegenwart mindestens eines Katalysators D)
und
b) anschließende Umsetzung der freien NCO-Gruppen des Reaktionsprodukts aus Schritt a) mit einem Aminosilan E).

2. Verfahren nach Anspruch 1, wobei die Polyolkomponente A) ein Polyetherpolyol mit einem zahlenmittleren Molekulargewicht im Bereich von 3000 bis 24000 g/mol ist.

3. Verfahren nach Anspruch 1, wobei die Polyolkomponente A) ein Polyetherpolyol mit einem zahlenmittleres Molekulargewicht von 5000 bis 16000 g/mol ist.

4. Verfahren nach Ansprüchen 1 bis 3, wobei die Polyolkomponente A) ein Polyetherpolyol auf Basis von Polypropylenoxid ist.

5. Verfahren nach Ansprüchen 1 bis 4, wobei als Diisocyanat B) ein aliphatisches, cycloaliphatisches oder araliphatisches Diisocyanat oder Mischungen davon eingesetzt wird.

6. Verfahren nach Ansprüchen 1 bis 5, wobei das Diisocyanat B) ausgewählt ist aus der Gruppe bestehend aus 1,6-Diisocyanatohexan, 1-Isocyanato-3,3,5-trimethyl-5-isocyanatomethylcyclohexan, 2,4- und 2,6-hexahydrotolylenediisocyanat, 2,4- und 2,6-Toluylendiisocyanat oder Mischungen davon.

7. Verfahren nach Ansprüchen 1 bis 6, wobei als Diisocyanat B) 1-Isocyanato-3,3,5-trimethyl-5-isocyanatomethylcyclohexan (Isophorondiisocyanat) eingesetzt wird.

8. Verfahren nach Ansprüchen 1 bis 7, wobei das Isocyanatosilan C) eine Verbindung der Formel (II) ist 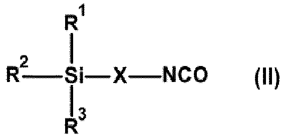 in welcher
R¹, R² und R³ unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy bedeuten, mit der Maßgabe, dass mindestens einer der Reste R¹, R² und R³ über ein Sauerstoffatom mit dem Siliziumatom verbunden ist, und
X für einen linearen oder verzweigten organischen Rest mit bis zu 6, vorzugsweise 1 bis 4 Kohlenstoffatomen, besonders bevorzugt für einen Propylenrest (-CH₂-CH₂-CH₂-) steht.

9. Verfahren nach Ansprüchen 1 bis 8, wobei als Isocyanatosilan C) 3-Isocyanatopropyltrimethoxysilan eingesetzt wird.

10. Verfahren nach Ansprüchen 1 bis 9, wobei das Aminosilan E) eine Verbindung der Formel (VIII) ist, 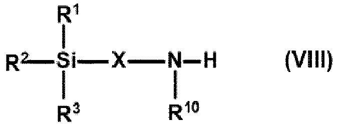 in welcher R¹, R², R³ und X die in Anspruch 8 genannte Bedeutung haben
und
R¹⁰ für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen oder einen Rest der Formel 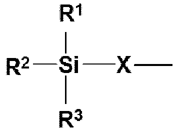 steht, in welchem R¹, R², R³ und X die vorstehend angegebene Bedeutung haben.

11. Verfahren nach Ansprüchen 1 bis 10, wobei das Aminosilan E) eine Verbindung der Formel (IX) ist 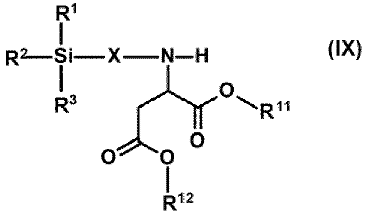 in welcher
R¹, R² und R³ die in Anspruch 8 genannte Bedeutung haben
X für einen linearen oder verzweigten organischen Rest mit mindestens 2 Kohlenstoffatomen steht und
R¹¹ und R¹² unabhängig voneinander gesättigte oder ungesättigte, lineare oder verzweigte, aliphatische oder cycloaliphatische oder aromatische organische Reste mit 1 bis 18 Kohlenstoffatomen sind, die substituiert oder unsubstituiert sind und/oder Heteroatome in der Kette aufweisen.

12. Verfahren nach Ansprüchen 1 bis 11, wobei die Menge an Aminosilan E) so gewählt ist, dass auf jede Isocyanatgruppe des in Verfahrensschritt a) entstandenen isocyanat- und silanfunktionellen Polymers 0,8 bis 1,2, vorzugsweise 0,9 bis 1,1, besonders bevorzugt 0,95 bis 1,05 Aminogruppen entfallen.

13. Verfahren nach einem der Ansprüche 1 bis 12, wobei die Umsetzung mit dem Diisocyanat B) und dem Isocyanatosilan C) in Gegenwart eines Sn-, Ti-, oder Yb-haltigen Katalysators D) durchgeführt wird.

14. Verfahren nach einem der Ansprüche 1 bis 13, wobei der Katalysator D) ausgewählt ist aus Sn(II)-, Sn(IV)- und Yb(III)-haltigen Verbindungen, sowie einem Organotitanat der Formel (VI)
wobei 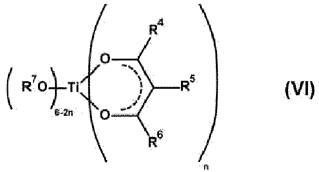
R⁴ für ein Wassers verzweigte Alkylgruppe mit 1
bis 8 C-Atomen, insbesondere für eine Methylgruppe steht;
R⁵ für ein Wasserstoffatom oder für eine lineare oder verzweigte Alkylgruppe mit 1 bis 8 C-Atomen, welche gegebenenfalls Heteroatome aufweist, insbesondere für ein Wasserstoffatom steht;
R⁶ für ein Wasserstoffatom oder für eine Alkylgruppe mit 1 bis 8, insbesondere mit 1 bis 3, C-Atomen oder für eine lineare oder verzweigte Alkoxygruppe mit 1 bis 8, insbesondere mit 1 bis 3, C-Atomen steht;
R⁷ für einen linearen oder verzweigten Alkylrest mit 2 bis 20 C-Atomen, insbesondere für einen Isobutyl- oder für einen Isopropylrest steht; und
n für einen Wert von 1 oder 2, insbesondere für 2 steht.

15. Verfahren nach einem der Ansprüche 1 bis 14, wobei der Katalysator ausgewählt ist aus einem Organotitanat und einer β-Diketonat-Verbindung der Nebengruppenmetalle Scandium, Lanthan, Cer, Praseodym, Neodym, Promethium, Samarium, Europium, Gadolinium, Terbium, Dysprosium Holmium, Erbium, Thulium, Ytterbium oder Lutetium.

16. Verfahren nach Ansprüchen 1 bis 15, wobei die Stoffmenge des eingesetzten Isocyanatosilans C) im Bereich von 1 bis 50 mol-%, vorzugsweise im Bereich von 5 bis 28 mol-%, besonders bevorzugt im Bereich von 10 bis 28 mol-%, ganz besonders bevorzugt im Bereich von 10 bis 25 mol-% und die Stoffmenge des eingesetzten Diisocyanats B) dementsprechend im Bereich von 50 bis 99 mol-%, vorzugsweise im Bereich von 72 bis 95 mol-%, besonders bevorzugt im Bereich von 72 bis 90 mol-%, ganz besonders bevorzugt im Bereich von 75 bis 90 mol-% bezogen auf die Anzahl der Hydroxylgruppen des Polyols A) liegt.

17. Verwendung der nach einem der Ansprüche 1 bis 16 hergestellten silanterminierten Polymere als Bindemittel in Beschichtungs-, Dichtungs- und Klebemitteln, insbesondere im Bereich des Bauwesens und in der Automobilindustrie.
